# EUROPEAN PATENT APPLICATION

(11) **EP 3 315 873 A1**
(43) Date of publication of application: **02.05.2018**
(21) Application number: 17196503.1
(22) Date of filing: 16.10.2017
(51) Int. Cl.: F24H 4/04, F24D 3/08, F24D 17/02, F28D 20/00

(54) **HEAT PUMP**

(30) Priority: 26.10.2016 SI 201600268
(71) Applicant: Gorenje Gospodinjski aparati d.d., 3503 Velenje (SI)
(72) Inventor: VI NJI , Zvonko, 3320 Velenje (SI); LIPU , Janez, 2341 Limbu (SI); APAT, Janez, 1000 Ljubljana (SI); ROBNIK, Vojko, 2390 Ravne na Koro kem (SI)
(74) Representative: Ivancic, Bojan

(57) **Abstract**

The present invention relates to a heat pump, particularly to a heat pump for sanitary water heating in a low temperature heating system. A heat pump (1) is formed as a compact heat pump (1) and comprises a sanitary water container (6) and a plurality of heat exchangers (7, 8, 9). The sanitary water container (6) is fluidly connected with both a sanitary cold water source (10) and a sanitary hot water sink (11), and wherein the heat pump (1) is thermodynamically and, respectively, fluidly connected to a heating element (19).

## Description

The present invention relates to a heat pump, particularly to a heat pump for sanitary water heating in a low temperature heating system.

Sanitary water heating in low temperature systems is generally known. Said system comprises a central heating apparatus, such as a central heat pump for example, a first heating branch thereof is intended for central heating of a building, such as underfloor heating for example, whereas a second heating branch thereof is intended for central sanitary water heating in a heat exchanger. Sanitary water heated in a described manner is kept in a sanitary hot water container. With known low temperature systems are both said heat exchanger and hot water container located in the immediate vicinity of the central heating apparatus, whereby a separate pipeline is led to each hot water consumer. For each consumer to be immediately provided with a respective quantity of sanitary hot water, an additional bypass line is usually led to each consumer.

However, there is an option of local sanitary water heating in the close vicinity of the consumer, whereby an electric heater is used located close to the consumer, usually on the wall or under the sink. Said solution represents duplicating of the heating capacities, in particular when a low temperature system is at the disposal.

It is the object of the present invention to create a heat pump, in particular a heat pump for sanitary water heating in a low temperature heating system, which remedies drawbacks of the known solutions.

The object as set forth is solved, according to the present invention, by features disclosed in the characterising part of claim 1. Detail of the invention is disclosed in respective sub-claims. It is provided for according to the present invention, that sanitary water is heated locally, as close as possible to a consumer of sanitary hot water, and sanitary hot water is heated by means of a compact heat pump instead of the electric heater. To this end said heat pump is formed with at least two heat exchangers preferably interconnected in a series.

The invention is further described in detail by way of non-limiting embodiment, and with a reference to the accompanying drawings, where
Fig. 1 shows a schematic view of a heat pump according to the invention,
Fig. 2 shows a schematic view of s second embodiment of a heat pump according to the invention.

A heat pump 1 according to the invention is intended for local sanitary water heating on sites where a central low temperature heating system 2 is provided with heating water having temperature of ≤ 35 °C. Said heating system 2 comprises several heating branches, such as underfloor heating branch 3, a branch 4 for a convector, and similar, wherein one of said heating branches is intended as a heating branch 5 for sanitary water heating. Said heating branch 5 for sanitary water heating is led to the immediate vicinity of a sanitary hot water consumer where it is fluidly connected with the heat pump 1.

Said heat pump 1 is formed as a compact heat pump and comprises a container 6 of sanitary water and at least two, and preferably at least three heat exchangers 7, 8, 9. The interior of the sanitary water container 6 is fluidly connected in a manner known per se both with a source 10 of cold water and a sink 11 and, respectively, consumer of the sanitary hot water. Further, it is provided that the heat pump 1 comprises a second heat exchanger 8, which is arranged, similar to a first heat exchanger 7, in a high pressure branch of the heat pump 1, and a third heat exchanger 9, which is arranged in a low pressure branch of the heat pump 1. Said second heat exchanger 8 is selected as a gas temperature reducer (*desuperheater*)*,* whereas said third heat exchanger 9 is selected as cooling agent evaporator of the heat pump 1.

Medium in said container 6 is heated by means of the first heat exchanger 7, which is located in the high pressure branch of the heat pump 1. In the present embodiment, said first heat exchanger 7 is selected as a pipeline which, in a manner of a screw thread, from the outside at least partially encompass said container 6 and heats medium inside said container. Alternatively, the first heat exchanger 7 is arranged inside the container 6 and surrounded by the medium to be heated. Said first heat exchanger 7 is fluidly connected by means of a discharge line 12 and via the third heat exchanger 9 with a compression means 13. Downstream with regard to the heat exchanger 7 a filtering means 14 followed by an expansion valve 15 is provided in the line 12 between the heat exchangers 7, 9. Said compression means 13 is fluidly connected by means of an inlet line 16 and via the second heat exchanger 8 with the first heat exchanger 7. Fluid connection of said first heat exchanger 7 via the third heat exchanger 9 and via the second heat exchanger 8 represents a high pressure branch of the heat pump 1. Furthermore, the third heat exchanger 9 thermodynamically connected via a line 17 with said heating branch 5 for sanitary water heating of the central low temperature heating system 2, which represents a first section of a low pressure branch of the heat pump 1. Yet further, the second heat exchanger 8 is thermodynamically and, respectively, fluidly connected via a line 18 with a heating element 19 arranged in the immediate vicinity of the heat pump and, respectively, in the same room as the heat pump 1 and a consumer 11 of the sanitary hot water. Heating medium which heats the heating element 19 is propelled in thermodynamically and, respectively, fluidly connected system heat exchanger 8 - line 18 - heating element 19 by a propelling means 20, such as a circulating pump which is a component part of the heat pump 1. With the present embodiment, said heating element 19 is selected as a radiator for example.

It is provided for according to the present invention that additionally, said compression means 13 is short-circuited by means of a short circuit bypass 21 with the first heat exchanger 7. Thus, the second heat exchanger 8 can be isolated from the thermodynamic and, respectively, fluid connection by means of the bypass 21. To this end, a first blocking means 22 is located in the inlet line 16 directly in front of the second heat exchanger 8, and a second blocking means 23 is located in said short circuit bypass 21. With the present embodiment, each blocking means 22, 23 is for example selected as a solenoid valve which is a component part of the heat pump 1.

Cooling agent flowing through the discharge line 12 from the first heat exchanger 7 passes through the expansion valve 15 where it starts to evaporate, and continues to flow through the third heat exchanger 9 where heat from the line 17 of said heating branch 5 of the central low temperature heating system 2 is transferred to cooling agent. Now, cooling agent is entirely evaporated, wherein it is led via the line 16 further into the compression means 13, which compresses cooling agent to the condensation pressure. Said compression means 13 pushes compressed and hot cooling agent via the first blocking means 22 in the inlet line 16 to the second heat exchanger 8, where hot evaporated cooling agent is cooled down to the condensation temperature or it even partially condense. The condensation degree depends on temperature and the flow rate of the heating medium which flows from the second heat exchanger 8 into the heating element 19. The flow rate of the heating medium is controlled by the propelling means 20 depending on pressure losses of the heating element 19 and said line 18 in a manner that heat removed from the hot cooling agent is sufficient for start of the condensation and, respectively, for a partial condensation of cooling agent in the second heat exchanger 8. Cooled and, respectively, partially condensed cooling agent continues to flow into the first heat exchanger 7 of the container 6 of the sanitary hot water. Hot cooling agent starts to condensate and, respectively, continues to condensate, wherein cooling agent supercools below the condensation temperature in the area of the exit from the first heat exchanger 7. The heat from the cooling agent is transferred to the sanitary water in the container 6. Supercooled liquid cooling agent continues to flow via the filtering means 14 and further to the expansion valve 15, where said process starts again. When no heated medium from the second heat exchanger 8 is to be delivered into the heating element 19, the hot cooling agent from the compression means 13 is redirected via the second blocking means 23 into the first heat exchanger 7 of the hot sanitary water container 6. The first blocking means 22 is closed, wherein the second heat exchanger 8 is isolated from the thermodynamic and, respectively, the fluid connection.

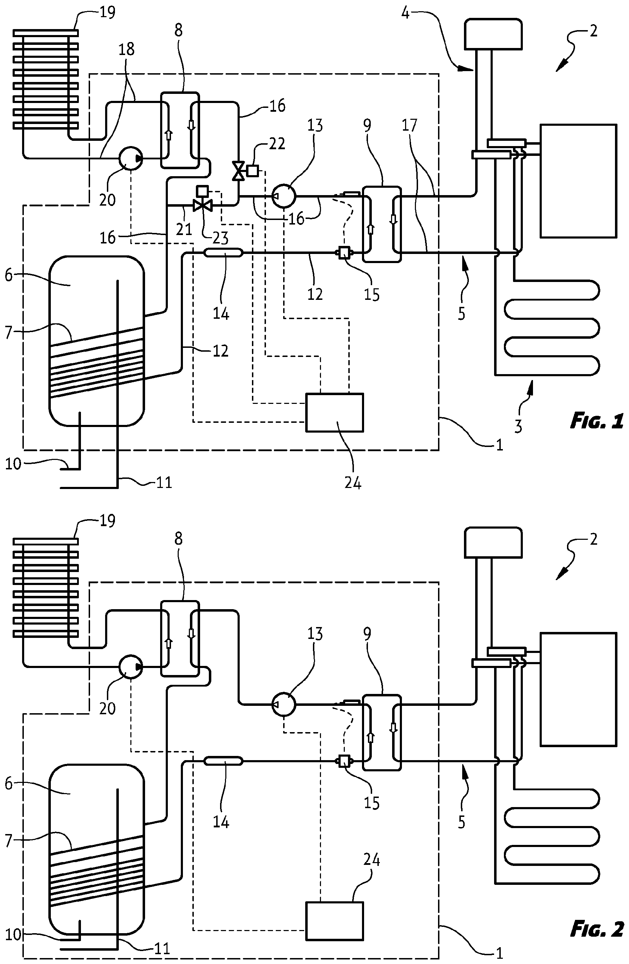

An alternative embodiment of the heat pump 1 (Fig. 2) is provided for according to the invention, where the short circuit bypass 21 is absent. As a result, the blocking means 22, 23 are also absent and, respectively, superfluous. With this second embodiment, the hot cooling agent from the compression means 13 is always led directly into the second heat exchanger 8 and further into the first heat exchanger 7 of the sanitary hot water container 6. The hot cooling agent emits a respective quantity of heat, depending on the water flow in the hydraulic circle of the heating element 19 governed by the propelling means 20. When the heating element 19 does not represent heat sink and the flow of the heating medium through the second heat exchanger 8 is absent, the entire heat quantity is transferred from cooling agent into the first heat exchanger 7 of the sanitary hot water container 6.

It is obvious, that the heat pump 1 according to the present invention comprises a control device 24 by means of which is governed the temperature of the heating medium, for example, flowing through the heating element 19, and the temperature of sanitary hot water and, respectively, is governed the blocking means 22, 23, the compression means 13, and the propelling means 20.

## Claims

1. A heat pump, particularly a heat pump for sanitary water heating in a low temperature heating system, ***characterised in that*** it is formed as a compact heat pump (1) and comprises a sanitary water container (6) and a plurality of heat exchangers (7, 8, 9), wherein sanitary water container (6) is fluidly connected with both a sanitary cold water source (10) and a sanitary hot water sink (11), and wherein the heat pump (1) is thermodynamically and, respectively, fluidly connected to a heating element (19).

2. A heat pump according to claim 1, ***characterised in that*** it comprises at least two, preferably three heat exchangers (7, 8, 9), wherein a first heat exchanger (7) and a second heat exchanger (8) are located in a high pressure branch of the heat pump (1), whereas a third heat exchanger (9) connected thermodynamically with a low temperature heating system (2) is located in a low pressure branch of the heat pump (1).

3. A heat pump according to claims 1 and 2, ***characterised in that*** said first heat exchanger (7) is selected as a pipeline which, in a manner of a screw thread, from the outside at least partially encompass said container (6).

4. A heat pump according to claims 1 and 2, ***characterised in that*** said first heat exchanger (7) is located inside the container (6) and surrounded by the medium to be heated

5. A heat pump according to claims 1 and 2, ***characterised in that*** said second heat exchanger (8) is selected as a gas temperature reducer, whereas said third heat exchanger (9) is selected as an evaporator of cooling agent of the heat pump (1).

6. A heat pump according to one of the preceding claims, ***characterised in that*** said first heat exchanger (7) is thermodynamically and, respectively, fluidly connected with the second heat exchanger (8) and with the third heat exchanger (9).

7. A heat pump according to one of the preceding claims, ***characterised in that*** a short circuit bypass (21) is added to the fluid connection between the heat exchangers (7, 8, 9) by means of which, and by utilising blocking means (22, 23), the heat exchanger (8) is isolated from the rest of the heat exchangers.

8. A heat pump according to one of the preceding claims, ***characterised in that*** a propelling means (20) is provided in the fluid connection between the second heat exchanger (8) and the heating element (19), said propelling means being a component part of the heat pump (1).
